# EUROPÄISCHE PATENTANMELDUNG

(11) **EP 3 542 985 A1**
(43) Veröffentlichungstag der Anmeldung: **25.09.2019**
(21) Anmeldenummer: 18210909.0
(22) Anmeldetag: 07.12.2018
(51) Int. Cl.: B29C 49/46, B29C 49/06, B29C 49/12, B29C 49/36, B29L 31/00

(54) **VORRICHTUNG ZUM EXPANDIEREN VON KUNSTSTOFFBEHÄLTNISSEN MIT DOPPELT WIRKENDER DRUCKERZEUGUNGSEINRICHTUNG**

(30) Priorität: 23.03.2018 DE 102018106932
(71) Anmelder: Krones AG, 93073 Neutraubling (DE)
(72) Erfinder: Finger, Dieter, 93073 Neutraubling (DE); Vornehm, Andreas, 93073 Neutraubling (DE); Meier, Dominik, 93073 Neutraubling (DE); Kitzinger, Thomas, 93073 Neutraubling (DE); Pense, Andreas, 93073 Neutraubling (DE); Hanesch, Cora, 93073 Neutraubling (DE); Betz, Christian, 93073 Neutraubling (DE)
(74) Vertreter: Bittner, Bernhard

(57) **Zusammenfassung**

Eine Vorrichtung (1) zum Expandieren von Kunststoffvorformlingen zu Kunststoffbehältnissen (10) mittels eines flüssigen Mediums mit wenigstens einer Umformungsstation (2), welche die Kunststoffvorformlinge mit dem flüssigen Medium befüllt und expandiert mit wenigstens einer Druckerzeugungseinrichtung (4), welche dazu geeignet und bestimmt ist, das flüssige Medium wenigstens einer Einfülleinrichtung (12) zuzuführen, welche Einfülleinrichtung (12) die Kunststoffvorformlinge mit dem flüssigen Medium befüllt, wobei die Druckerzeugungseinrichtung (4) einen Druckausgang (42) aufweist, der wenigstens zeitweise in Strömungsverbindung mit dem zu befüllenden Kunststoffvorformling bringbar ist. Erfindungsgemäß weist die Vorrichtung (1) eine Entnahmeeinrichtung (6) auf, welche dazu geeignet und bestimmt ist, wenigstens zeitweise ein fließförmiges Medium aus einem Kunststoffbehältnis zu entnehmen wobei die Druckerzeugungseinrichtung (4) einen Ansaugeingang (44) aufweist, der wenigstens zeitweise mit dieser Entnahmeeinrichtung (6) in Strömungsverbindung bringbar ist, um das fließförmige Medium zu entnehmen.

## Beschreibung

Die vorliegende Erfindung bezieht sich auf eine Vorrichtung und ein Verfahren zum Expandieren von Kunststoffvorformlingen zu Kunststoffbehältnissen. Derartige Vorrichtungen und Verfahren sind aus dem Stand der Technik seit Langem bekannt. Üblicherweise werden dabei zunächst erwärmte Kunststoffvorformlinge expandiert und anschließend die so gefertigten Flaschen mit einem Produkt befüllt. In jüngerer Zeit sind jedoch auch Vorgehensweisen bekannt geworden, bei denen nicht zuerst die Kunststoffvorformlinge mit Druckluft expandiert werden, sondern bei denen die Kunststoffvorformlinge direkt mit einem flüssigen Medium, insbesondere dem abzufüllenden Produkt befüllt werden.

Beim Formen von Behältnissen bzw. Flaschen mit Füllgut tritt jedoch die Problematik auf, dass mehr Füllgut zum Formen verwendet werden muss als später wirklich im Behälter bleiben wird. Daher muss Gas in den sogenannten Kopfraum der Behältnisse gelangen, um einen sogenannten Füllspiegel (Kante zwischen Füllgut und Kopfraumgas) einzustellen. Je nach technischer Notwendigkeit können unterschiedliche bzw. verschiedene Füllspiegel notwendig sein. Somit sollte eine Verstellbarkeit bei gleichzeitiger Reproduzierbarkeit des jeweiligen Füllspiegels gewährleistet werden.

Aus dem internen Stand der Technik der Anmelderin ist es bekannt, einen Siphoneffekt zu nutzen, bei dem ein Überdruck in ein geometrisch weiter untenstehendes Aufnahmebehältnis über das Behältnis entlastet wird und somit sich ein Unterdruck in dem Behältnis (bewirkt durch einen Saugeffekt bei Siphons) einstellt. Dieser Unterdruck wird derzeit nicht verhindert und nicht belüftet. Durch die fehlende Belüftung kann es dazu kommen, dass sich das Behältnis verformt und Volumen verdrängt. Anschließend wird mit einer Reckstange über die Position der Reckstange im Füllgut ein bestimmtes Volumen verdrängt (dieses ergibt sich aus dem Quadrat des Reckstangenradius mal π mal der Höhe innerhalb des Füllguts) und so nach anschließender Belüftung ein bestimmtes Kopfraumvolumen in der Flasche bzw. dem Behälter eingestellt.

Alternativ wäre es auch möglich, Volumen aus dem Behältnis abzusaugen. Dazu werden im internen Stand der Technik der Anmelderin Vakuumpumpen verwendet. Daneben kann auch mit Hilfe eines Gases, welches unter Überdruck steht, Füllgut verdrängt werden und so ein Füllspiegel eingestellt werden.

Damit auf der Saugseite der Druckerzeugungseinrichtung (bzw. der überdruckabgewandten Seite des Kolbens) kein zu großer Unterdruck entsteht, wird diese Seite belüftet oder eventuell druckbeaufschlagt.

Beim Absaugen nach dem internen Stand der Technik der Anmelderin wird derzeit eine Vakuumpumpe benötigt, welche wartungsintensiv und sehr teuer ist. Auch das Verdrängen des Füllguts mit der Reckstange hat den Nachteil, dass die Reckstangengeometrie nur in gewissen Grenzen variabel ist. So muss sie einen gewissen Abstand zur Innenseite des Kunststoffvorformlings aufweisen, um Reckstangenkontakt zu vermeiden bzw. das Füllen des Kunststoffvorformlings mit Füllgut noch sicherzustellen.

So kann es passieren, dass die Reckstange zu weit unten in dem Behältnis positioniert werden muss, um den Füllspiegel in dem Behältnis zu erreichen und so ein langer Verfahrweg nötig ist, was Prozesszeit benötigt. Auch kann es passieren, dass das Volumen, welches die Reckstange verdrängt, nicht ausreicht, um den gewünschten Füllspiegel bzw. Kopfraum einzustellen. Dies kann insbesondere auftreten, wenn das Kopfraumvolumen größer ist als das Reckstangenvolumen innerhalb des Behältnisses. Durch die fehlende Entlastung bzw. Belüftung beim Verdrängen von Füllgut mit Hilfe eines Siphoneffekts zwischen einer Entlastung und einem Verfahren der Reckstange im Füllgut bildet sich ein sehr hoher Unterdruck im Füllgut aus.

Dies kann dazu führen, dass das Behältnis kollabiert. Beim Kollabieren bzw. Implodieren des Behältnisses werden (Soll-)Bruchstellen in der Flaschenseitenwand erzeugt, welche beim anschließenden mechanischen Beanspruchen bzw. bei Kopflast zu einem vorzeitigen Versagen führen, anders als bei Behältnissen ohne diese (Soll-)Bruchstellen. Wird nun kurzzeitig die Reckstange innerhalb einer dichten Flasche (kein Füllgut kann mehr in die Flasche gelangen) verfahren, um beispielsweise Füllgut zwischen der Abdichtung des Füllkopfes und der Mundstückoberkante zu verdrängen, so wird ein weiterer Unterdruck in dem Behältnis erzeugt, was zu noch mehr (Soll-)Bruchstellen führt und auch zu einem mechanisch schlechteren Behältnis (insbesondere einer Flasche).

Der vorliegenden Erfindung liegt daher die Aufgabe zugrunde, eine Vorrichtung und ein Verfahren zur Verfügung zu stellen, welches die Vorgehensweisen aus dem Stand der Technik einerseits vereinfacht und andererseits bevorzugt auch variabler gestaltet. Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Expandieren von Kunststoffvorformlingen zu Kunststoffbehältnissen mittels eines flüssigen Mediums weist mindestens eine Umformungsstation bevorzugt wenigstens zwei Umformungsstationen auf, welche die Kunststoffvorformlinge mit dem flüssigen Medium befüllen und expandieren. Weiterhin weist die Vorrichtung wenigstens eine Druckerzeugungseinrichtung auf, welche dazu geeignet und bestimmt ist, das flüssige Medium wenigstens einer Einfülleinrichtung zuzuführen, welche die Kunststoffbehältnisse mit dem flüssigen Medium befüllt. Dabei weist die Druckerzeugungseinrichtung einen Druckausgang auf, der wenigstens zeitweise in Strömungsverbindung mit dem zu befüllenden Kunststoffvorformling bringbar ist.

Erfindungsgemäß weist die Vorrichtung eine Entnahmeeinrichtung auf, welche dazu geeignet und bestimmt ist, wenigstens zeitweise ein fließförmiges Medium aus einem Kunststoffbehältnis zu entnehmen, wobei die Druckerzeugungseinrichtung einen Ansaugeingang aufweist, der wenigstens zeitweise mit dieser Entnahmeeinrichtung in Strömungsverbindung bringbar ist, um das fließförmige Medium zu entnehmen.

Bevorzugt handelt es sich bei dem fließfähigen Medium um die abzufüllende Flüssigkeit. Bei dieser Flüssigkeit kann es sich etwa um "leichtfließende" Flüssigkeiten wie etwa Wasser, Säfte, Milch, Biere oder Weine handeln. Bei der Flüssigkeit kann es sich jedoch auch um zähfließende Flüssigkeiten wie Saucen, Öle oder ähnliches handeln. Daneben kann es sich bei der abzufüllenden Flüssigkeit sowohl um karbonisierte Flüssigkeiten als auch um nicht karbonisierte Flüssigkeiten handeln.

Dabei kann dasjenige Behältnis, aus dem die Flüssigkeit entnommen wird, auch dasjenige Behältnis sein, welches expandiert wird, es wäre jedoch auch möglich, dass die Entnahmeeinrichtung Flüssigkeit aus einem anderen Behältnis, insbesondere einem von einer anderen Umformungsstation expandierten Behältnis entnimmt.

Bevorzugt ist eine Druckerzeugungseinrichtung mit mindestens einer Umformungsstation (und insbesondere den Einfülleinrichtungen und/oder Entnahmeeinrichtungen dieser wenigstens einen und bevorzugt wenigstens zwei Umformungsstationen) in Strömungsverbindung bringbar. Bevorzugt weist die Vorrichtung, wie oben erwähnt wenigstens zwei, bevorzugt wenigstens vier Umformungsstationen auf.

Es wird darauf hingewiesen, dass die Begriffe Kunststoffbehältnis und Kunststoffvorformling teilweise synonym verwendet werden. Dies beruht darauf, dass der Kunststoffvorformling durch den hier beschriebenen Umformungsvorgang zu dem Kunststoffbehältnis umgeformt wird und daher während des Einfüllvorgangs nicht zu allen Zeitpunkten eindeutig von einem Kunststoffvorformling oder einem Kunststoffbehältnis gesprochen werden kann.

Bevorzugt handelt es sich bei den zu expandierenden und zu befüllenden Kunststoffbehältnissen um Behältnisse, welche aus einem Material hergestellt sind, welches aus einer Gruppe von Materialien ausgewählt ist, welche PET, HDPE, PP und dergleichen enthält. Bevorzugt handelt es sich bei den zu expandierenden und befüllenden Behältnissen um Flaschen.

Vorteilhaft handelt es sich bei dem fließförmigen Medium um ein flüssiges Medium und bevorzugt um das Füllgut. Dabei ist es möglich, dass die Flüssigkeit aus dem Behältnis entnommen wird, welches gerade expandiert wird, es kann jedoch auch Flüssigkeit aus einem anderen Behältnis entnommen werden. Hierbei kann es sich insbesondere um ein Behältnis handeln, welches bereits (zumindest weitgehend) befüllt und expandiert wurde.

Es wird daher vorgeschlagen, dass auch hier ein Absaugen von Flüssigkeit aus dem oder einem anderen Behältnis vorgenommen wird, jedoch wird anstelle der im Stand der Technik verwendeten Vakuumpumpe direkt eine Saugseite der Druckerzeugungseinrichtung verwendet. Im Gegensatz zum Stand der Technik, bei welcher eine Seite der Druckerzeugungseinrichtung belüftet oder mit Überdruck beaufschlagt wird, kann der an der Saugseite der Druckerzeugungseinrichtung entstehende Unterdruck verwendet werden, um Füllgut aus diesem Behältnis der besagten Umformungsstation oder aber einer anderen Station (und/oder einem von dieser Station behandelten Behältnis) abzusaugen. Alternativ wäre es auch denkbar, ein Absaugen von Flüssigkeit über die Saugseite einer Vakuumpumpe zu erzeugen. Dabei kann wie unten genauer erläutert der entstehende Unterdruck beispielsweise verwendet werden, um durch eine hohle Reckstange oder einen zusätzlichen Kanal Füllgut abzusaugen. Dieses kann dabei in einen anderen Bereich zurückgeführt werden.

Bevorzugt weist die Druckerzeugungseinrichtung ein gegenüber einem Flüssigkeitsraum bewegbares Kolbenelement auf. Dieses Kolbenelement kann durch seine Bewegung bezüglich diesem Flüssigkeitsraum einerseits den Druck der Flüssigkeit erzeugen, der das Behältnis expandiert und andererseits gegenüber einem anderen Abschnitt des Aufnahmeraums einen Unterdruck erzeugen, der wiederum zum Absaugen von Flüssigkeit verwendet werden kann. Bevorzugt teilt das Kolbenelement den Flüssigkeitsraum in zwei Raumabschnitte.

Bei einer vorteilhaften Ausführungsform sind der Druckausgang und der Ansaugeingang auf unterschiedlichen Seiten des Flüssigkeitsraums bezüglich des Kolbenelements angeordnet. Bei dieser Ausgestaltung wird eine erste Bewegung des Kolbenelements in einer ersten Bewegungsrichtung dazu genutzt, um das Behältnis mit der Flüssigkeit zu befüllen. Diese Bewegung des Kolbenelements (in der gleichen Richtung) wird auch genutzt, um Flüssigkeit aus diesem Behältnis oder einem weiteren Behältnis (über den Ansaugeingang) abzusaugen und/oder zu entnehmen.

Bei einer vorteilhaften Ausführungsform sind der Druckausgang und der Ansaugeingang auf der gleichen Seite des Flüssigkeitsraums bezüglich des Kolbenelements angeordnet. Bei dieser Ausgestaltung wird eine erste Bewegung des Kolbenelements in einer ersten Bewegungsrichtung dazu genutzt, um das Behältnis mit der Flüssigkeit zu befüllen. Eine zweite Bewegung des Kolbenelements (bei der es sich um eine Bewegung in der entgegengesetzten Bewegungsrichtung handelt) wird genutzt, um Flüssigkeit aus diesem Behältnis oder einem weiteren Behältnis abzusaugen und/oder zu entnehmen.

In einer bevorzugten Ausführungsform weist die Druckerzeugungseinrichtung einen Kolben auf. Es könnten jedoch auch Ausführungsformen Anwendung finden, welche anstelle oder neben einem Kolben andere Elemente, etwa rotierende Elemente verwenden, um auf einer Seite einen Unterdruck und auf der anderen Seite einen Überdruck zu erzeugen.

Bei einer bevorzugten Ausführungsform weist die Vorrichtung einen bewegbaren Träger auf, an dem die Umformungsstationen angeordnet sind. Vorteilhaft handelt es sich bei dem bewegbaren Träger um einen bezüglich einer Drehachse drehbaren Träger. Besonders bevorzugt sind an dem Träger mehrere Umformungsstationen angeordnet. So können beispielsweise zwischen 5 und 60 Umformungsstationen an diesem Träger angeordnet sein. Es wird darauf hingewiesen, dass die Umformungsstationen bevorzugt auch als Füllstationen dienen. Alternativ wäre es auch denkbar, dass die Umformungsstationen stationär angeordnet sind.

Alternativ wäre es auch möglich, dass die Vorrichtung die Umformungsstationen und/oder die umzuformenden Behältnisse wenigstens teilweise entlang eines geradlinigen Transportpfads transportiert. So könnte die Vorrichtung etwa eine Transportkette aufweisen, die beispielsweise entlang eines Ovals mit geradlinigen Streckenanteilen geführt wird. Auch könnten die Umformungsstationen an Magnetshuttles angeordnet sein, die sich entlang eines Stators bewegen.

Der Vorteil bei der Verwendung stationärer Umformungsstationen ist, dass während des Umformungsvorgangs keine Fliehkräfte auftreten. Daneben treten auch geringere Probleme mit Beschleunigungen und Verzögerungen beim Antrieb des Formrads auf.

Bei einer weiteren bevorzugten Ausführungsform weist die Einfülleinrichtung eine Beaufschlagungseinrichtung auf, welche an einen Mündungsrand der Kunststoffvorformlinge anlegbar ist, um diese mit dem flüssigen Medium zu befüllen (und um diese insbesondere auch zu expandieren). Vorteilhaft liegt dabei diese Einfülleinrichtung dichtend an dem Mündungsrand des jeweiligen Kunststoffvorformlings an. Weiterhin kann die Einfülleinrichtung Ventileinrichtungen aufweisen, um die Zuführung des Produkts in die Kunststoffvorformlinge zu steuern. Dabei ist es auch möglich, dass während eines Expansionsvorgangs die Flüssigkeit mit unterschiedlichen Drücken in die Kunststoffvorformlinge gefördert wird.

Bei einer bevorzugten Ausführungsform weisen die einzelnen Umformungsstationen auch Umformungsformen auf, innerhalb derer die Kunststoffvorformlinge durch Beaufschlagung mit dem flüssigen Medium expandiert werden. Diese Umformungsformen können dabei geöffnet und geschlossen werden, wobei in einem geschlossenen Vorgang die Expansion der Kunststoffvorformlinge möglich ist. Dabei ist es möglich, dass diese Umformungsformen Formteile aufweisen, die bezüglich einander schwenkbar sind und insbesondere bezüglich einander bezüglich einer Achse schwenkbar sind, die parallel zur Längsrichtung des Kunststoffvorformlings verläuft.

Bei einer weiteren vorteilhaften Ausführungsform weist die Vorrichtung eine Aufnahmeeinrichtung für aus dem Behältnis entnommenes flüssiges Medium auf. Dabei kann es sich um ein zusätzliches Reservoir handeln, innerhalb welches abgesaugtes Medium zwischengespeichert werden kann. Zusätzlich oder alternativ zu dem Reservoir kann die Flüssigkeit jedoch auch in Leitungsabschnitten gespeichert werden.

Damit ist es möglich, dass der Unterdruck (genauer gesagt die Flüssigkeit) bei Bedarf in einem Tank gespeichert wird. Bei einem dichten Behältnis kann auch hier ein Kollabieren des Behältnisses eingeleitet werden oder aber bei einem belüfteten Behältnis die gewünschte Füllgutmenge abgesaugt werden. Die Füllgutmenge, welche sich dann in einem Sammelbehälter ansammelt, kann beispielsweise mittels eines Ventils oder eines Ausgangs entweder wieder einem Produktkessel, wie einer Sammeleinrichtung für das Produkt, zugeführt werden, oder auch anderweitig verwendet werden.

Auch könnte der Unterdruck beispielsweise für eine Absaugung von Tropfen in dem Abdichtungsbereich des Füllkopfes verwendet werden. Bevorzugt wird damit durch eine Bewegung der Kolbeneinrichtung sowohl ein Druck für die Zuführung der Flüssigkeit in das Behältnis erzeugt, als auch eine Absaugwirkung aus diesem Behältnis oder aber einem anderen Behältnis. Dabei ist es möglich, dass der Druck durch eine Abwärtsbewegung oder aber eine Aufwärtsbewegung des Kolbens oder durch eine horizontale Bewegung erzeugt wird, je nachdem wie der Kolben bzw. die Druckerzeugungseinrichtung ausgerichtet bzw. angeordnet ist.

Die hier beschriebene Erfindung kann sowohl bei einfach wirkenden Kolben als auch bei doppeltwirkenden Kolben als auch bei parallel geschalteten Kolben verwendet werden. Bei einer bevorzugten Ausführungsform wäre es auch denkbar, dass eine Bewegungsrichtung des Kolbens genutzt wird, um eine bestimmte Umformungsstation bzw. das in dieser Umformungsstation befindliche Behältnis mit der Flüssigkeit zu befüllen und die andere, entgegengesetzte Bewegungsrichtung des Kolbens dazu genutzt wird, um eine weitere Umformungsstation bzw. das in dieser weiteren Umformungsstation befindliche Behältnis mit der Flüssigkeit zu befüllen.

Daneben kann bevorzugt auch eine Abdichtung der Reckstange wenigstens zeitweise erfolgen, sodass ein Absaugen zeitweise nicht möglich ist.

Dieses Abdichten der Reckstange kann dabei beispielsweise über den Kontakt zur Kuppe des Kunststoffvorformlings und der Reckstange beim Längsrecken verwendet werden. In diesem Falle wäre es ausreichend, nur das Behältnis, den Kopf und den Zylinder drucklos zu gestalten, bevor mit der Absaugung begonnen wird. Daneben wäre es auch möglich, einen geringen Überdruck anzulegen, insbesondere wenn das abzufüllende Medium eine gewisse Kompressibilität aufweist, etwa weil es sich um ein Gemisch aus dem abzufüllenden Produkt und Luft handelt.

Durch eine Verbindung einer Reckstange oder einer zusätzlichen Leitung kann auch ein Unterdruck an der Saugseite der Druckerzeugungseinrichtung verwendet werden, um die Füllhöhe einzustellen. Bei einer weiteren bevorzugten Ausführungsform wird anstelle einer Vakuumpumpe ein Venturi Effekt verwendet. So ist es möglich, dass anstelle eines Belüftens einer Seite oder eines Überdruckbeaufschlagens auch ein entsprechender Unterdruck, der entsteht, wenn das Produkt durch eine Engstelle strömt, verwendet wird, um Füllgut aus einem Behälter der eigenen Umformungsstation oder einer anderen Umformungsstation (insbesondere im Rundläufer oder Linearläuferverbund) abzusaugen.

Ein entstehender Unterdruck kann auch verwendet werden, um durch eine hohle Reckstange oder einen zusätzlichen Kanal Füllgut abzusaugen. Daneben wäre ein Schalten der Absaugung auch über ein automatisches und/oder schaltbares Ventil möglich. Daneben wäre es auch möglich, über eine hohle Reckstange und ein gegebenenfalls schaltbares Rückschlagventil in der Reckstange das Behältnis zu belüften.

Bei einer weiteren vorteilhaften Ausführungsform weist die Vorrichtung eine Aufnahmeeinrichtung für aus dem Behältnis entnommenes flüssiges Medium auf. Diese Aufnahmeeinrichtung kann dabei ein zusätzlicher Sammelbehälter sein. Bei einer weiteren vorteilhaften Ausführungsform weist die Vorrichtung eine Schließeinrichtung auf, um einen Strömungsweg des flüssigen Mediums aus dem Behältnis zu schließen. Dabei kann es sich wie oben erwähnt um ein weiteres Ventil handeln, oder auch dieser Schließeffekt kann durch eine Abdichtung der Reckstange am Boden des Behältnisses erreicht werden.

Bei einer weiteren vorteilhaften Ausführungsform weist die Vorrichtung einen stangenartigen (und insbesondere in die Behältnisse durch deren Mündung einführbaren) Körper zum Dehnen der Behältnisse auf, wobei dieser stangenartige Körper bevorzugt einen Kanal zum Leiten des flüssigen Mediums aufweist.

Auf diese Weise kann eine hohle Reckstange verwendet werden, durch die insbesondere auch das flüssige Medium oder insbesondere das Produkt geleitet werden kann.

Bei einer weiteren vorteilhaften Ausführungsform weist die Vorrichtung ein weiteres Aufnahmebehältnis zur Aufnahme des flüssigen Mediums auf und dieses weitere Aufnahmebehältnis ist vorteilhaft unterhalb des zu expandierenden Kunststoffbehältnisses angeordnet. Über dieses weitere Aufnahmebehältnis kann insbesondere auch ein Siphoneffekt zum Absaugen von Flüssigkeit aus dem Behältnis genutzt werden.

Bei einer weiteren vorteilhaften Ausgestaltung steht dieses weitere Aufnahmebehältnis wenigstens zeitweise in Strömungsverbindung mit dem zu expandierenden Behältnis und/oder mit einem weiteren in einer anderen Umformungsstation zu expandierenden Behältnis.

Bei einer weiteren vorteilhaften Ausführungsform weist die Vorrichtung eine Pumpeneinrichtung auf, welche dazu geeignet und bestimmt ist, wenigstens zeitweise ein Kolbenelement der Druckbeaufschlagungseinrichtung zu bewegen. Bei dieser Ausgestaltung ist bevorzugt diese Pumpeneinrichtung bevorzugt in einem Zulauf dieses Kolbenelements einer Pumpeneinrichtung vorgesehen. Bevorzugt kann diese Pumpe das Kolbenelement in einer vorgegebenen Richtung bewegen, insbesondere das Kolbenelement in eine Position zurückstellen, von der ein weiterer Einfüllvorgang durchgeführt werden kann.

Bevorzugt ist ein Zulauf zu der Druckbeaufschlagungseinrichtung vorgesehen, über den der Druckbeaufschlagungseinrichtung insbesondere die abzufüllende Flüssigkeit zugeführt wird. Bevorzugt weist dieser Zulauf eine Ventileinrichtung auf, um die Zufuhr von Flüssigkeit an die Druckbeaufschlagungseinrichtung zu steuern. Dieses Ventil kann geschlossen werden, um die Druckbeaufschlagungseinrichtung von der Produktzuführung zu trennen.

Die vorliegende Erfindung ist weiterhin auf ein Verfahren zum Expandieren von Kunststoffvorformlingen zu Kunststoffbehältnissen mittels eines flüssigen Mediums und insbesondere mittels eines Füllprodukts gerichtet, welche mindestens eine, bevorzugt wenigstens zwei Umformungsstationen aufweist, welche die Kunststoffvorformlinge mit dem flüssigen Medium befüllen und expandieren. Dabei ist wenigstens eine Druckerzeugungseinrichtung vorgesehen, welche das flüssige Medium mittels einer Einfülleinrichtung zuführt, welche Einfülleinrichtung die Kunststoffvorformlinge mit dem flüssigen Medium befüllt. Dabei weist die Druckerzeugungseinrichtung einen Druckausgang auf, der wenigstens zeitweise in Strömungsverbindung mit dem zu befüllenden Kunststoffvorformling steht.

Erfindungsgemäß ist eine Entnahmeeinrichtung vorgesehen, welche wenigstens zeitweise ein fließförmiges Medium aus einem Kunststoffbehältnis entnimmt, wobei diese Druckerzeugungseinrichtung einen Ansaugeingang aufweist, der wenigstens zeitweise mit dieser Entnahmeeinrichtung in Strömungsverbindung steht, um das fließförmige Medium zu entnehmen.

Es wird daher auch verfahrensseitig vorgeschlagen, dass die Druckerzeugungseinrichtung einerseits genutzt wird, um das Füllgut in den Kunststoffvorformling zu fördern bzw. zu pressen und um andererseits aus diesem Behältnis oder einem anderen Behältnis ein flüssiges Füllgut abzusaugen. Vorteilhaft handelt es sich hierbei um ein anderes Behältnis als dasjenige Behältnis, welches gerade expandiert wird. Hierbei ist zu beachten, dass zunächst die Behältnisse expandiert werden und anschließend die entsprechende Flüssigkeit aus dem Kopfraum der Behältnisse abgesaugt wird.

Bevorzugt erfolgt das Befüllen eines Behältnisses und das Absaugen von flüssigem Medium (insbesondere aus einem weiteren Behältnis) wenigstens zeitweise gleichzeitig.

Bei einem weiteren bevorzugten Verfahren erfolgt die Entnahme des fließfähigen Mediums aus dem Behältnis wenigstens teilweise durch einen stangenartigen Körper hindurch, wobei bevorzugt dieser stangenartige Körper wenigstens zeitweise in einer Längsrichtung des Kunststoffbehältnisses in dieses eingeführt wird. Bevorzugt dehnt dieser stangenartige Körper wenigstens zeitweise das Behältnis in seiner Längsrichtung.

Bei einem weiteren bevorzugten Verfahren erfolgt wenigstens zeitweise ein Belüften und insbesondere ein Belüften des Behältnisses über den stangenartigen Körper, wobei dieses Belüften insbesondere unter Ausnutzung des Venturieffekts erfolgt.

Weitere Vorteile und Ausführungsformen ergeben sich aus den beigefügten Zeichnungen.

Darin zeigen:
- Fig. 1: eine schematische Darstellung einer erfindungsgemäßen Anordnung;
- Fig. 2: eine Detaildarstellung der in Figur 1 gezeigten Anordnung;
- Fig. 3: eine Draufsicht auf die in Figur 2 gezeigte Darstellung;
- Fig. 4: eine grob schematische Darstellung einer erfindungsgemäßen Vorrichtung.

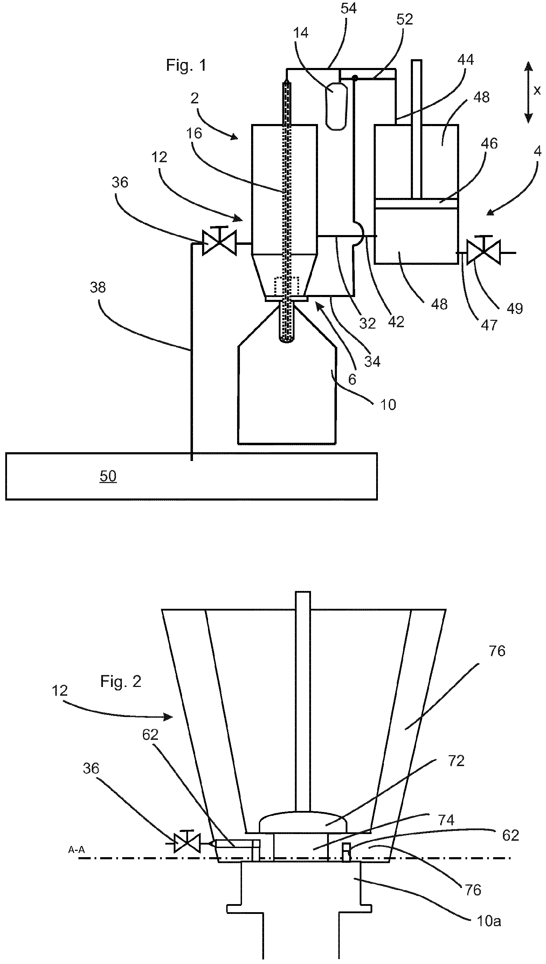

Figur 1 zeigt eine schematische Darstellung einer erfindungsgemäßen Umformungsstation 2. Dabei bezieht sich das Bezugszeichen 10 auf ein Behältnis, welches expandiert und gleichzeitig mit dem Füllgut befüllt wird. Das Bezugszeichen 16 kennzeichnet eine sogenannte Reckstange, die über die Mündung des Behältnisses in dieses einführbar ist, um dieses auch während des Dehnvorgangs in seiner Längsrichtung zu strecken. Diese Reckstange weist bevorzugt in ihrem Inneren einen Kanal und insbesondere einen sich in der Längsrichtung der Reckstange erstreckenden Kanal auf, durch welchen das flüssige Medium fließen kann.

Das Bezugszeichen 4 kennzeichnet in seiner Gesamtheit eine Druckerzeugungseinrichtung. Diese Druckerzeugungseinrichtung weist einen Kolben 46 auf, der gegenüber einem Flüssigkeitsraum 48 in der Richtung x bewegbar ist, um so über einen Druckausgang 42 die Flüssigkeit über eine Leitung 32 zu einer in ihrer Gesamtheit mit 12 bezeichneten Einfülleinrichtung zu fördern. Ausgehend von der Einfülleinrichtung gelangt die Flüssigkeit in das Behältnis 10. Die Einfülleinrichtung 12 dient bevorzugt gleichzeitig als Druckbeaufschlagungseinrichtung, um die Kunststoffvorformlinge mit einem Druck, um diese zu expandieren, zu beaufschlagen, um diese zu expandieren.

Das Bezugszeichen 44 kennzeichnet einen Ansaugeingang der Druckbeaufschlagungseinrichtung. Bei einer Bewegung des Kolbenelements in Figur 1 nach unten wird über diesen Ansaugeingang 44 Medium angesaugt. Hierzu ist eine Leitung 34 vorgesehen, die von dem Ausgang zu der Einfülleinrichtung 12 und ebenfalls zu der Mündung des Behältnisses 10 führt. Daneben kann auch Flüssigkeit über die hohle Reckstange 16 in die Verbindungsleitung 54 abgesaugt werden. Das Bezugszeichen 14 kennzeichnet ein Aufnahmebehältnis zum (Zwischen-) Speichern von Flüssigkeit. Das Bezugszeichnen 52 kennzeichnet eine weitere Leitungseinrichtung. Die Gesamtheit dieser einzelnen Leitungen bildet gemeinsam mit der hier auch zur Entnahme von Flüssigkeit dienenden Einfülleinrichtung die Entnahmeeinrichtung 6.

Weiterhin ist eine Leitung 38 vorgesehen, über welche Flüssigkeit durch den Siphoneffekt in ein Aufnahmebehältnis 50 gelangen kann. Das Bezugszeichen 36 kennzeichnet ein Ventil, um diesen Fluidstrom zuzulassen oder zu sperren. Damit wäre es möglich, über die hohle Reckstange 16 und gegebenenfalls ein schaltbares Rückschlagventil, welches in der Reckstange angeordnet sein könnte, Flüssigkeit abzusaugen. Dieses Rückschlagventil könnte verhindern, dass Füllgut wieder in die Reckstange gelangt. Auf diese Weise könnte nach oder während des Kollabierens des Kunststoffbehältnisses durch den Siphoneffekt das Behältnis belüftet werden und so das Behältnis wieder in seinen Ursprungszustand verbracht werden. Ein entstehender kurzzeitiger Unterdruck durch den Siphoneffekt könnte das Rückschlagventil öffnen und über eine Zuleitung könnte Luft aus der Umgebung oder auch ein neutrales Gas wie Stickstoff oder Kohlendioxid aus einem Tank zugeführt werden.

Über den Druck in dem Behältnis beim Öffnen dieses Ventils der Zuleitung wäre das verdrängte Volumen in dem Behältnis einstellbar. Wenn die Zuleitung der Luft während der Entlastung stattfindet, müsste die Reckstangenposition tiefer sein als 50 % der Flaschenhöhe um ein Herausspülen des Gases aus dem Behältnis in Richtung des Aufnahmebehältnisses 50 zu verhindern. Da die Entlastung relativ schnell stattfindet, kann trotz Zuleiten von Luft die Luft noch nicht so schnell nach oben steigen, um von dem Siphoneffekt in Richtung des Aufnahmebehältnisses gespült zu werden.

In diesem Fall könnte ein Druck unter 4 bar gehalten werden und es wäre kein weiteres Mittel zum Abbau eines Drucks nötig.

Alternativ könnte die Abdichtung der Reckstange auch über einen Kontakt zwischen der Kuppe des Kunststoffvorformlings und der Reckstange beim Längsrecken durchgeführt werden.

Auch ein Nachdrücken des Kolbens 46 beim Entlasten in einem weiter unten gelegenen Tank wäre denkbar. Durch ein Nachdrücken des Kolbens 46 bei einem geöffneten Ventil 72 (vgl. Figur 2) in der Einfülleinrichtung 12 könnte der Überdruck, der durch das Verfahren des Kolbens entstehen würde, das Kollabieren von Behältnissen durch den tieferen Tank und den sich einstellenden Siphoneffekt verhindern.

Das Ventil 36 in Richtung des Behältnisses 50 könnte vorzeitig geschlossen werden.

Der letzte Überdruck könnte dann durch ein Rückfahren des Kolbens 46 und/oder der Reckstange abgebaut werden. Dies könnte mit einem Druckaufnehmer in der Einfülleinrichtung 12 oder in dem Behältnis gesteuert und/oder geregelt werden.

Weiterhin wäre es auch möglich, dass die Verbindung 54 zwischen der Reckstange und dem Aufnahmeraum oberhalb des Kolbens 46 dazu verwendet wird, um den Kolbenantrieb zu reinigen, um beispielsweise den Kolben 46 in eine Position zu fahren, in der kein Kontakt zur Seitenwand herrscht und über eine Zuleitung 47 und/oder eine separate Versorgung in die Verbindung bzw. die einzelnen Zuleitungen ein Reinigungsmedium eingebracht wird. Das Bezugszeichen 49 kennzeichnet ein Ventil in dieser Zuleitung.

Insgesamt kann auf diese Weise eine Vakuumpumpe eingespart werden und es können die prozesstechnischen Gegebenheiten des Kolbenantriebs des Kolbens 46 genutzt werden. Weiterhin ist auf diese Weise ein kontrolliertes Kollabieren des Behältnisses durch eine Reckstangeneinrichtung bzw. ein Nachdrücken des Kolbens 46 möglich.

Weiterhin wäre es auch möglich, ein neutrales Gas zuzuführen. Bei dem hier vorgeschlagenen Verfahren wäre auch ein Unterdruck im Kopf, jedoch nicht durch die Reckstange injiziert, sondern durch den Füllkolben 46. Auch die Belüftung wäre hiervon noch betroffen. Wie oben erwähnt bestünde eine Alternative darin, ein Rückschlagventil (insbesondere in der Reckstange) vorzusehen, welches bei Unterdruck den Gaspfad im Inneren der Reckstange freigibt. Daneben könnte der Unterdruck auch über den oben erwähnten Siphoneffekt erreicht werden. Auch könnte der Unterdrück über Öffnungen in der Beaufschlagungseinrichtung bzw. Fülldüse erreicht werden.

Überdruck beaufschlagte Luft kann bevorzugt durch insbesondere horizontal angeordnete Belüftungsbohrungen in der Reckstange in dem Behältnis eingelassen wird und aufgrund der Höhe der Belüftungsbohrung kann bevorzugt auch die Füllhöhe eingestellt werden. Daneben wäre es auch denkbar, dass diese Belüftungsbohrungen vertikal angeordnet sind oder auch schräg angeordnet sind.

Bei einer weiteren Vorgehensweise wäre es auch denkbar, das Behältnis 10 , und/oder die Einfülleinrichtung 12 und/oder die Druckbeaufschlagungseinrichtung 4 drucklos zu machen (oder mit einem leichten Überdruck zu beaufschlagen), bevor mit dem Entnahmevorgang und/oder Absaugvorgang begonnen wird. Auf diese Weise könnte durch die Reckstange (insbesondere deren Kanal) oder auch durch eine zusätzliche Leitung zwischen dem Behältnis 10 und dem Aufnahmeraum (nicht gezeigt) der Unterdruck (insbesondere beim Zurückfahren des Kolbenelements 46 verwendet werden, um die Füllhöhe einzustellen.

Figur 2 zeigt eine Detaildarstellung der erfindungsgemäßen Einfülleinrichtung. Hier ist insbesondere das Ventil 72 dargestellt, welches sich auch an die Reckstange anschließen kann. Das Bezugszeichen 62 kennzeichnet einen Ausgang, über den Flüssigkeit aus dem Behältnis abgesaugt werden kann und beispielsweise der Leitung mit dem Ventil 36 zugeführt werden kann. Das Bezugszeichen 10a kennzeichnet einen Mündungsrand des Kunststoffvorformlings, an den die Einfülleinrichtung 12 angelegt wird. Zu diesem Zweck kann die Einfülleinrichtung einen Anlagerand 76 aufweisen, der umfänglich an der Mündung des Kunststoffvorformlings angelegt wird.

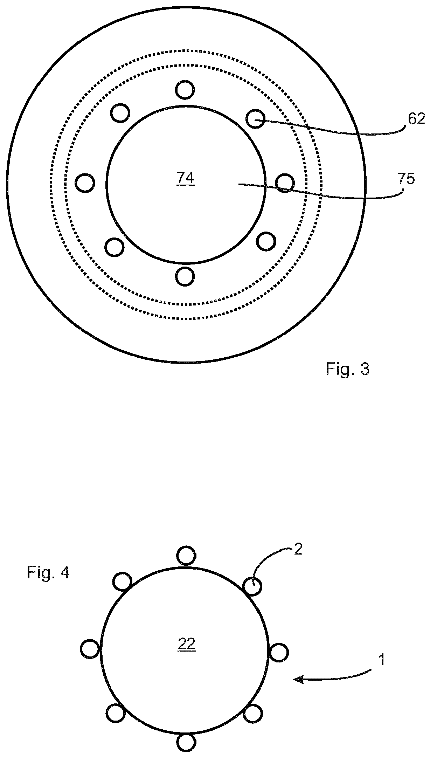

Figur 3 zeigt eine Detaildarstellung dieses Bereichs der Einfülleinrichtung und des Randes des Kunststoffvorformlings. Hier erkennt man insbesondere wieder die Öffnungen 62, über welche Medium aus dem Behältnis abgesaugt bzw. bei Überdruck entnommen werden kann und durch den Siphoneffekt dem Aufnahmebehältnis 50 zugeführt werden kann.

Das Bezugszeichen 75 kennzeichnet ebenfalls eine Öffnung, über welche Flüssigkeit strömen kann. Das Bezugszeichen 74 kennzeichnet das in das Behältnis 10 einströmende Füllgut d.h. die abzufüllende Flüssigkeit

Figur 4 schließlich zeigt eine grob schematische Darstellung einer erfindungsgemäßen Vorrichtung 1. Diese weist einen drehbaren Träger 22 auf, an dem eine Vielzahl von Umformungsstationen 2 angeordnet ist. Dabei wäre es wie oben erwähnt auch möglich, dass mit einer ersten Umformungsstation 2 ein Behältnis ausgeformt bzw. befüllt wird und Flüssigkeit aus einem Behältnis, welches von einer weiteren Umformungsstation gerade behandelt wird, abgesaugt wird.

Auf diese Weise ist es möglich, dass jeder Umformungsstation ein einzelner Kolben bzw. eine einzelne Druckbeaufschlagungseinrichtung 4 zugeordnet ist. Es wäre jedoch auch möglich, dass eine Druckbeaufschlagungseinrichtung mehreren Umformungsstationen zugeordnet ist. Daneben können auch Strömungsverbindungen zwischen einer Umformungsstation 2 und der Druckbeaufschlagungseinrichtung, welche einer weiteren Umformungsstation zugeordnet ist, vorhanden sein.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Vorrichtung
- 2: Umformungsstation
- 4: Druckerzeugungseinrichtung
- 10: Behältnis
- 10a: Mündungsrand
- 12: Einfülleinrichtung
- 14: Aufnahmebehältnis
- 16: Reckstange
- 22: Träger
- 32: Leitung
- 34: Leitung
- 36: Ventil
- 38: Leitung
- 42: Druckausgang
- 44: Ansaugeingang
- 46: Kolben
- 47: Zuleitung
- 48: Flüssigkeitsraum
- 49: Ventil
- 50: Aufnahmebehältnis
- 52: Leitungseinrichtung
- 54: Verbindungsleitung
- 62: Ausgang, Öffnung
- 72: Ventil
- 74: abzufüllende Flüssigkeit
- 75: Öffnung
- 76: Anlagerand
- X: Bewegungsrichtung

## Patentansprüche

1. Vorrichtung (1) zum Expandieren von Kunststoffvorformlingen zu Kunststoffbehältnissen (10) mittels eines flüssigen Mediums mit mindestens einer Umformungsstation (2), welche die Kunststoffvorformlinge mit dem flüssigen Medium befüllen und expandieren mit wenigstens einer Druckerzeugungseinrichtung (4), welche dazu geeignet und bestimmt ist, das flüssige Medium wenigstens einer Einfülleinrichtung (12) zuzuführen, welche Einfülleinrichtung (12) die Kunststoffvorformlinge mit dem flüssigen Medium befüllt, wobei die Druckerzeugungseinrichtung (4) einen Druckausgang (42) aufweist, der wenigstens zeitweise in Strömungsverbindung mit dem zu befüllenden Kunststoffvorformling bringbar ist,
**dadurch gekennzeichnet dass**
die Vorrichtung (1) eine Entnahmeeinrichtung (6) aufweist, welche dazu geeignet und bestimmt ist, wenigstens zeitweise ein fließförmiges Medium aus einem Kunststoffbehältnis zu entnehmen wobei die Druckerzeugungseinrichtung (4) einen Ansaugeingang (44) aufweist, der wenigstens zeitweise mit dieser Entnahmeeinrichtung (6) in Strömungsverbindung bringbar ist, um das fließförmige Medium zu entnehmen.

2. Vorrichtung (1) nach Anspruch 1,
**dadurch gekennzeichnet, dass**
die Druckerzeugungseinrichtung (4) ein gegenüber einem Flüssigkeitsraum (48) bewegbares Kolbenelement (46) aufweist.

3. Vorrichtung (1) nach wenigstens einem der vorangegangenen Ansprüche,
**dadurch gekennzeichnet, dass**
die Vorrichtung einen bewegbaren oder stationiären Träger (22) aufweist, an dem die Umformungsstationen (2) angeordnet sind.

4. Vorrichtung (1) nach wenigstens einem der vorangegangenen Ansprüche,
**dadurch gekennzeichnet, dass**
die Vorrichtung eine Aufnahmeeinrichtung (14) für aus dem Behältnis entnommenes flüssiges Medium aufweist.

5. Vorrichtung (1) nach wenigstens einem der vorangegangenen Ansprüche,
**dadurch gekennzeichnet, dass**
die Vorrichtung (1) eine Schließeinrichtung aufweist, um einen Strömungsweg des flüssigen Mediums aus dem Behältnis zu verschließen.

6. Vorrichtung (1) nach wenigstens einem der vorangegangenen Ansprüche,
**dadurch gekennzeichnet, dass**
die Vorrichtung einen stangenartigen Körper (16) zum Dehnen der Behältnisse (10) aufweist, wobei dieser stangenartige Körper (16) bevorzugt einen Kanal zum Leiten des flüssigen Mediums aufweist.

7. Vorrichtung (1) nach wenigstens einem der vorangegangenen Ansprüche,
**dadurch gekennzeichnet, dass**
die Vorrichtung ein weiteres Aufnahmebehältnis (50) zur Aufnahme des flüssigen Mediums aufweist und dieses weitere Aufnahmebehältnis (50) vorteilhaft unterhalb des zu expandierenden Kunststoffbehältnisses (10) angeordnet ist.

8. Vorrichtung (1) nach Anspruch 7,
**dadurch gekennzeichnet, dass**
das weitere Aufnahmebehältnis (50) wenigstens zeitweise in Strömungsverbindung mit dem zu expandierenden Behältnis (10) steht.

9. Verfahren zum Expandieren von Kunststoffvorformlingen (10) zu Kunststoffbehältnissen mittels eines flüssigen Mediums mit mindestens einer Umformungsstation (2), welche die Kunststoffvorformlinge mit dem flüssigen Medium befüllen und expandieren wobei wenigstens eine Druckerzeugungseinrichtung (4) das flüssige Medium wenigstens einer Einfülleinrichtung (12) zuführt, welche Einfülleinrichtung (12) die Kunststoffbehältnisse mit dem flüssigen Medium befüllt, wobei die Druckerzeugungseinrichtung (4) einen Druckausgang (42) aufweist der wenigstens zeitweise in Strömungsverbindung mit dem zu befüllenden Kunststoffvorformling (10) steht,
**dadurch gekennzeichnet dass**
die Vorrichtung (1) eine Entnahmeeinrichtung (6) aufweist, welche wenigstens zeitweise ein fließförmiges Medium aus einem Kunststoffbehältnis entnimmt wobei die Druckerzeugungseinrichtung (4) einen Ansaugeingang (44) aufweist, der wenigstens zeitweise mit dieser Entnahmeeinrichtung (6) in Strömungsverbindung steht ist, um das fließförmige Medium zu entnehmen.

10. Verfahren nach dem vorangegangenen Anspruch,
**dadurch gekennzeichnet, dass**
die Entnahme des fließfähigen Mediums aus dem Behältnis wenigsten teilweise durch einen stangenartigen Körper hindurch erfolgt, wobei bevorzugt dieser stangenartige Körper wenigstens zeitweise in einer Längsrichtung des Kunststoffbehältnisses in dieses eingeführt wird.

11. Verfahren nach wenigstens einem der vorangegangenen Ansprüche,
**dadurch gekennzeichnet, dass**
wenigstens zeitweise ein Belüften über den stangenartigen Körper erfolgt, wobei dieses Belüften insbesondere unter Ausnutzung des Venturieffekts erfolgt.
